# EUROPEAN PATENT SPECIFICATION

(11) **EP 3 476 557 B1**
(45) Date of publication and mention of the grant of the patent: **22.07.2020**
(21) Application number: 18203801.8
(22) Date of filing: 31.10.2018
(51) Int. Cl.: B26B 19/38

(54) **METHOD AND DEVICE FOR CONTROLLING A HAIR TRIMMING APPARATUS AND HAIR TRIMMING APPARATUS**
VERFAHREN UND VORRICHTUNG ZUR STEUERUNG EINER HAARSCHNEIDERVORRICHTUNG UND HAARSCHNEIDERVORRICHTUNG
PROCÉDÉ ET DISPOSITIF DE COMMANDE D'UN APPAREIL COUPE-CHEVEUX ET APPAREIL COUPE-CHEVEUX

(30) Priority: 31.10.2017 CN 201711047249
(43) Date of publication of application: 01.05.2019
(73) Proprietor: Beijing Xiaomi Mobile Software Co., Ltd., Beijing 100085 (CN)
(72) Inventor: WU, Ke, Beijing, Beijing 100085 (CN)
(74) Representative: dompatent von Kreisler Selting Werner - Partnerschaft von Patent- und Rechtsanwälten mbB

(56) References cited:
- WO-A1-2013/096572
- WO-A1-2015/063651
- WO-A1-2017/108937
- US-A1- 2015 217 465

## Description

### TECHNICAL FIELD

The present disclosure generally relates to the technical field of automatic control, and more particularly, to a method and device for controlling a hair trimming apparatus and the hair trimming apparatus.

### BACKGROUND

A hair trimming apparatus may usually drive a cutting tool to rotate via a motor. For exemplary aspect, for a reciprocating shaver, a rotating speed of its motor is high and the motor rotating at a high speed may drive blades swinging leftwards and rightwards to perform shaving. Related technology is known from WO 2013/096572 A1.

### SUMMARY

The present disclosure is defined in the independent claims. This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

The present disclosure provides a method and device for controlling a hair trimming apparatus and the hair trimming apparatus in accordance with claims which follow.

According to a first aspect of the present disclosure, a method for controlling a hair trimming apparatus is provided, which may include that: a hair characteristic parameter of hair to be trimmed is detected, wherein the hair characteristic parameter may be configured to represent a characteristic of the hair; a blade operating parameter of the hair trimming apparatus for trimming the hair is determined based on the hair characteristic parameter; and blade of the hair trimming apparatus is controlled to operate based on the blade operating parameter to trim the hair.

Further, the operation that the hair characteristic parameter of the hair is detected may include that: the hair is detected via a sensor to acquire sensing data, and the hair characteristic parameter of the hair is determined based on the sensing data.

Further, the sensor is a pressure sensor, the sensing data is a resistance value sensed by the pressure sensor, and the operation that the hair characteristic parameter of the hair is determined based on the sensing data includes that: the hair is detected via the pressure sensor to obtain the resistance value sensed by the pressure sensor; a first preset correspondence between resistance values and hair characteristic parameters is acquired; and the hair characteristic parameter corresponding to the resistance value sensed by the pressure sensor is determined based on the first correspondence.

Alternatively, the sensor is a pressure sensor, the sensing data is a resistance value sensed by the pressure sensor, and the operation that the hair characteristic parameter of the hair is determined based on the sensing data includes that: the hair is detected via the pressure sensor to obtain the resistance value sensed by the pressure sensor; whether the resistance value sensed by the pressure sensor is greater than a first preset resistance threshold value is determined; when the resistance value is greater than the first preset resistance threshold value, the hair characteristic parameter of the hair is determined to be a first characteristic parameter; when the resistance value is not greater than the first preset resistance threshold value, whether the resistance value is less than a second preset resistance threshold value is determined, wherein the second preset resistance threshold value is less than the first preset resistance threshold value; when the resistance value is less than the second preset resistance threshold value, the hair characteristic parameter of the hair is determined to be a second characteristic parameter; and
when the resistance value is not less than the second preset resistance threshold value, the hair characteristic parameter of the hair is determined to be a third characteristic parameter.

In an example of the first aspect, the operation that the blade operating parameter of the hair trimming apparatus for trimming the hair is determined based on the hair characteristic parameter may include that: a second preset correspondence between hair characteristic parameters and blade operating parameters is acquired; and the blade operating parameter corresponding to the hair characteristic parameter of the hair is determined based on the second correspondence.

In an example of the first aspect, the operation that the blade operating parameter of the hair trimming apparatus for trimming the hair is determined based on the hair characteristic parameter may include that: a third preset correspondence between hair characteristic parameters and blade operating modes is acquired, wherein different blade operating modes may correspond to different blade operating parameters, and the hair trimming apparatus may include at least two blade operating modes; and a blade operating mode corresponding to the hair characteristic parameter of the hair is determined based on the third correspondence.

In an example of the first aspect, the characteristic of the hair includes at least one of a hair density, a hair thickness or a hair hardness, and the blade operating parameter comprises at least one of a blade rotating speed, a blade rotating duration or blade sharpness.

According to a second aspect of the present disclosure, a hair trimming apparatus is provided, which is characterized by including: a detection module, configured to detect a hair characteristic parameter of hair to be trimmed, wherein the hair characteristic parameter may be configured to represent a characteristic of the hair; a parameter determination module, configured to determine a blade operating parameter of the hair trimming apparatus for trimming the hair based on the hair characteristic parameter; and a control module, configured to control a blade of the hair trimming apparatus to operate based on the blade operating parameter to trim the hair.

Further, the hair trimming apparatus further includes at least one of a camera or a sensor, the detection module may include: a detection submodule, configured to detect the hair via a sensor to acquire sensing data and determine the hair characteristic parameter of the hair based on the sensing data.

In an example of the second aspect, the sensor may be a pressure sensor, the sensing data may be a resistance value sensed by the pressure sensor, and the detection submodule may include: a first resistance value detection submodule, configured to detect the hair via the pressure sensor to obtain the resistance value sensed by the pressure sensor; a first acquisition submodule, configured to acquire a first preset correspondence between resistance values and hair characteristic parameters; and a first determination submodule, configured to determine the hair characteristic parameter corresponding to the resistance value sensed by the pressure sensor based on the first correspondence.

In an example of the second aspect, the sensor may be a pressure sensor, the sensing data may be a resistance value sensed by the pressure sensor, and the detection submodule may include: a second resistance value detection submodule, configured to detect the hair via the pressure sensor to obtain the resistance value sensed by the pressure sensor; a first judgment submodule, configured to determine whether the resistance value is greater than a first preset resistance threshold value; a first processing module, configured to, when the first judgment submodule determines that the resistance value is greater than the first preset resistance threshold value, determine the hair characteristic parameter of the hair to be a first characteristic parameter; a second judgment submodule, configured to, when the first judgment submodule determines that the resistance value is not greater than the first preset resistance threshold value, determine whether the resistance value is less than a second preset resistance threshold value, wherein the second preset resistance threshold value is less than the first preset resistance threshold value; a second processing module, configured to, when the second judgment submodule determines that the resistance value is less than the second preset resistance threshold value, determine the hair characteristic parameter of the hair to be a second characteristic parameter; and a third processing module, configured to, when the second judgment submodule determines that the resistance value is not less than the second preset resistance threshold value, determine the hair characteristic parameter of the hair to be a third characteristic parameter.

In an example of the second aspect, the parameter determination module may include: a second acquisition submodule, configured to acquire a second preset correspondence between hair characteristic parameters and blade operating parameters; and a second determination submodule, configured to determine the blade operating parameter corresponding to the hair characteristic parameter of the hair based on the second correspondence.

In an example of the second aspect, the parameter determination module may include: a third acquisition submodule, configured to acquire a third preset correspondence between hair characteristic parameters and blade operating modes, wherein different blade operating modes may correspond to different blade operating parameters, and the hair trimming apparatus may include at least two blade operating modes; and a third determination submodule, configured to determine a blade operating mode corresponding to the hair characteristic parameter of the hair based on the third correspondence.

According to a third aspect of the present disclosure, a device for controlling a hair trimming apparatus is provided, which may include: a processor; and a memory configured to store an instruction executed by the processor, wherein the processor may be configured to: detect a hair characteristic parameter of hair, wherein the hair characteristic parameter may be configured to represent a characteristic of the hair; determine a blade operating parameter of the hair trimming apparatus for trimming the hair based on the hair characteristic parameter; and control a blade of the hair trimming apparatus to operate based on the blade operating parameter to trim the hair.

According to a fourth aspect of the present disclosure, a computer-readable storage medium is provided, on which a computer instruction may be stored, the instruction being executed by a processor to implement the steps of the control method for the hair trimming apparatus according to the first aspect.

It should be understood that the above general descriptions and detailed descriptions below are exemplary and explanatory only, and not intended to limit the present disclosure.

### BRIEF DESCRIPTION OF THE DRAWINGS

The accompanying drawings, which are incorporated in and constitute a part of this specification, illustrate aspects consistent with the present disclosure and, together with the description, serve to explain the principles of the present disclosure.
Fig. 1 is a flow chart illustrating a method for controlling a hair trimming apparatus, according to an exemplary aspect of the present disclosure;
Fig. 2 illustrates an application scenario of a method for controlling a hair trimming apparatus, according to an exemplary aspect of the present disclosure;
Fig. 3 is a flow chart illustrating another method for controlling a hair trimming apparatus, according to an exemplary aspect of the present disclosure;
Fig. 4 is a flow chart illustrating another method for controlling a hair trimming apparatus, according to an exemplary aspect of the present disclosure;
Fig. 5 is a flow chart illustrating another method for controlling a hair trimming apparatus, according to an exemplary aspect of the present disclosure;
Fig. 6 is a flow chart illustrating another method for controlling a hair trimming apparatus, according to an exemplary aspect of the present disclosure;
Fig. 7 is a flow chart illustrating another method for controlling a hair trimming apparatus, according to an exemplary aspect of the present disclosure;
Fig. 8 is a block diagram of a device for controlling a hair trimming apparatus, according to an exemplary aspect of the present disclosure;
Fig. 9 is a block diagram of another device for controlling a hair trimming apparatus, according to an exemplary aspect of the present disclosure;
Fig. 10 is a block diagram of another device for controlling a hair trimming apparatus, according to an exemplary aspect of the present disclosure;
Fig. 11 is a block diagram of another device for controlling a hair trimming apparatus, according to an exemplary aspect of the present disclosure;
Fig. 12 is a block diagram of another device for controlling a hair trimming apparatus, according to an exemplary aspect of the present disclosure;
Fig. 13 is a block diagram of another device for controlling a hair trimming apparatus, according to an exemplary aspect of the present disclosure; and
Fig. 14 is a block diagram of a device 1400 for controlling a hair trimming apparatus, according to an exemplary aspect of the present disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary aspects, examples of which are illustrated in the accompanying drawings. The following description refers to the accompanying drawings in which the same numbers in different drawings represent the same or similar elements unless otherwise represented. The implementations set forth in the following description of illustrative aspects do not represent all implementations consistent with the present disclosure. Instead, they are merely examples of apparatuses and methods consistent with aspects related to the present disclosure as recited in the appended claims.

The terminology in the present disclosure is for the purpose of describing specific aspects only and is not intended to limit the present disclosure. As used in the present disclosure and the appended claims, the singular forms "a", "said" and "the" are intended to include the plural forms as well, unless the context clearly indicates otherwise. It shall also be understood that the term "and/or" used herein are intended to signify and include any or all possible combinations of one or more of the associated listed items.

It should be understood that, although terms first, second, third and the like may be used herein to describe various information, the information should not be limited to these terms. These terms are only used to distinguish one category of information from another. For example, without departing from the scope of the present disclosure, first information may also be called as second information, and similarly, second information may also be called as first information. This depends on a context. As used herein, the term "if' may be understood to mean "when" or "upon" or "in response to determining" depending on the context.

An existing hair trimming apparatus may drive a cutting tool to rotate through a motor. For example, for a reciprocating shaver, a rotating speed of its motor is high and the motor rotating at a high speed may drive blades swinging leftwards and rightwards to easily and rapidly implement complete shaving.

However, the inventor finds that a rotating speed of a hair trimming apparatus in a related art is relatively undiversified and may not meet a requirement of a user. In order to solve the problems existing in the related art, a method and device for controlling a hair trimming apparatus are provided.

The technical solutions provided by the aspects of the present disclosure will be described below with specific examples.

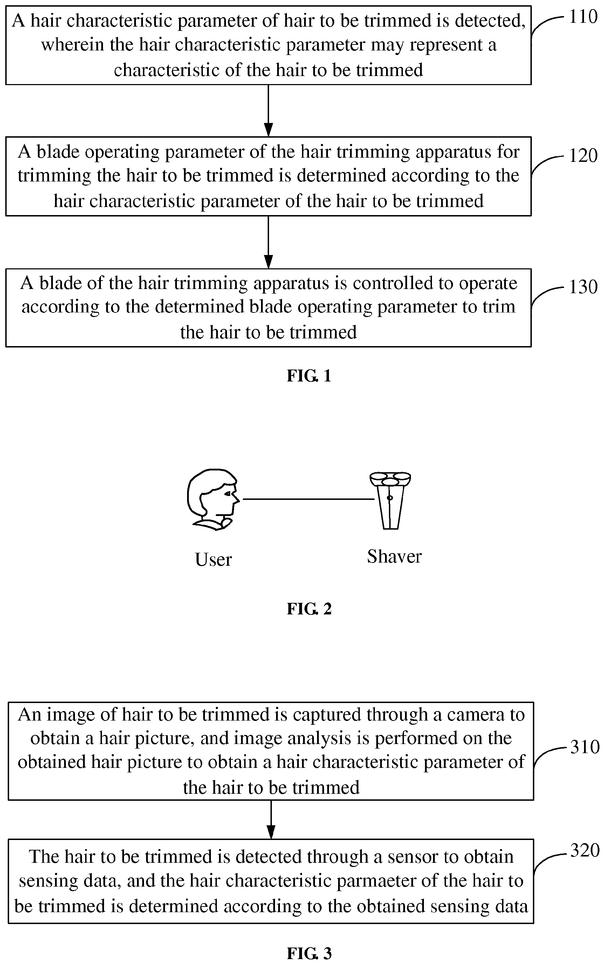

As illustrated in Fig. 1, Fig. 1 is a flow chart illustrating a method for controlling a hair trimming apparatus, according to an aspect of the present disclosure. Fig. 2 illustrates an application scenario of a method for controlling a hair trimming apparatus, according to an aspect of the present disclosure. The method for controlling the hair trimming apparatus may be applied to the hair trimming apparatus, for example, a shaver. As illustrated in Fig. 1, the method for controlling the hair trimming apparatus may include the following steps 110-120.

In Step 110, a hair characteristic parameter of hair to be trimmed is detected, wherein the hair characteristic parameter may represent a characteristic of the hair to be trimmed.

In the aspect of the present disclosure, the characteristic of the hair to be trimmed may include, but not limited to: a hair density, and/or a hair thickness, and/or hair hardness and the like.

In Step 120, a blade operating parameter of the hair trimming apparatus for trimming the hair to be trimmed is determined according to the hair characteristic parameter of the hair to be trimmed.

In the aspect of the present disclosure, the blade operating parameter includes, but not limited to: a blade rotating speed, and/or a blade rotating duration, and/or blade sharpness and the like.

For example, when the hair density, the hair thickness or the hair hardness is higher, a higher blade rotating speed may be determined to improve hair trimming efficiency; and when the hair density, the hair thickness or the hair hardness is lower, a smaller blade rotating speed may be determined to save energy, reduce loss of the apparatus and the like.

In Step 130, a blade of the hair trimming apparatus is controlled to operate according to the blade operating parameter to trim the hair to be trimmed.

In the aspect, the hair trimming apparatus includes, but not limited to: a shaver, a haircutter, a pet shaver and the like. The hair trimming apparatus of the present disclosure may be applied to hair trimming of a person (a male, a female, an adult and a child), a pet or the like. For example, the hair trimming apparatus is a hair trimmer for a pet. Since the pet has fragile skin and hair on the back and the abdomen usually have different hardness, densities and the like, according to the present disclosure, proper blade operating parameters may be determined for hair characteristic parameters of hair at different parts.

In an exemplary scenario, as illustrated in Fig. 2, a user and a shaver used as a hair trimming apparatus are included. When the shaver trims beards of the user, a hair characteristic parameter of the beards may be detected at first, then a blade operating parameter of the shaver is determined according to the detected hair characteristic parameter, and finally, a blade of the shaver is controlled to operate according to the determined blade operating parameter to trim the beards of the user.

From the above example, it can be seen that: the hair characteristic parameter of the hair to be trimmed is detected, the blade operating parameter of the hair trimming apparatus for trimming the hair to be trimmed is determined according to the hair characteristic parameter of the hair to be trimmed, the blade of the hair trimming apparatus is controlled to operate according to the determined blade operating parameter to trim the hair to be trimmed, and then the hair trimming apparatus may automatically adjust a proper blade operating parameter for operation according to the hair characteristic parameter of the hair to be trimmed, so that hair trimming efficiency is improved, resource loss is also reduced, and the user's satisfaction is also improved.

As illustrated in Fig. 3, Fig. 3 is a flow chart illustrating another method for controlling a hair trimming apparatus, according to an aspect of the present disclosure. The method for controlling the hair trimming apparatus may be applied to the hair trimming apparatus and is implemented on the basis of the method illustrated in Fig. 1. When Step 110 is executed, as illustrated in Fig. 3, the method includes the following Step 310 and/or Step 320.

In Step 310, an image of the hair to be trimmed is captured through a camera to obtain a hair picture, and image analysis is performed on the obtained hair picture to obtain the hair characteristic parameter of the hair to be trimmed.

In the aspect of the present disclosure, the camera may be arranged on the hair trimming apparatus. When the hair is required to be trimmed, the hair picture may be captured through the camera, and then image analysis is performed on the hair picture, thereby determining at least one of the hair density, hair thickness or hair hardness of the hair to be trimmed.

In Step 320, the hair to be trimmed is detected through a sensor to obtain sensing data, and the hair characteristic parameter of the hair to be trimmed is determined according to the obtained sensing data.

In the aspect of the present disclosure, the sensor may be arranged on the hair trimming apparatus. When the hair is required to be trimmed, the hair to be trimmed may be detected through the sensor to obtain the sensing data, and then at least one of the hair density, hair thickness or hair hardness of the hair to be trimmed are determined according to the obtained sensing data.

The sensor arranged on the hair trimming apparatus may include, but not limited to, a density sensor, and/or a pressure sensor and the like. In the aspect, the density sensor may directly detect the hair density in the hair characteristic of the hair to be trimmed, and the pressure sensor may indirectly deduce the hair characteristic parameter of the hair to be trimmed according to a sensed resistance value.

From the exemplary aspect, it can be seen that: the hair to be trimmed may also be photographed through the camera to obtain the hair picture; image analysis is performed on the obtained hair picture to obtain the hair characteristic parameter of the hair to be trimmed; and/or the hair to be trimmed is detected through the sensor to obtain the sensing data, and the hair characteristic parameter of the hair to be trimmed is determined according to the obtained sensing data. Therefore, implementation modes for detecting the hair characteristic parameter of the hair to be trimmed are enriched, and automatic detection efficiency of the hair trimming apparatus is further improved.

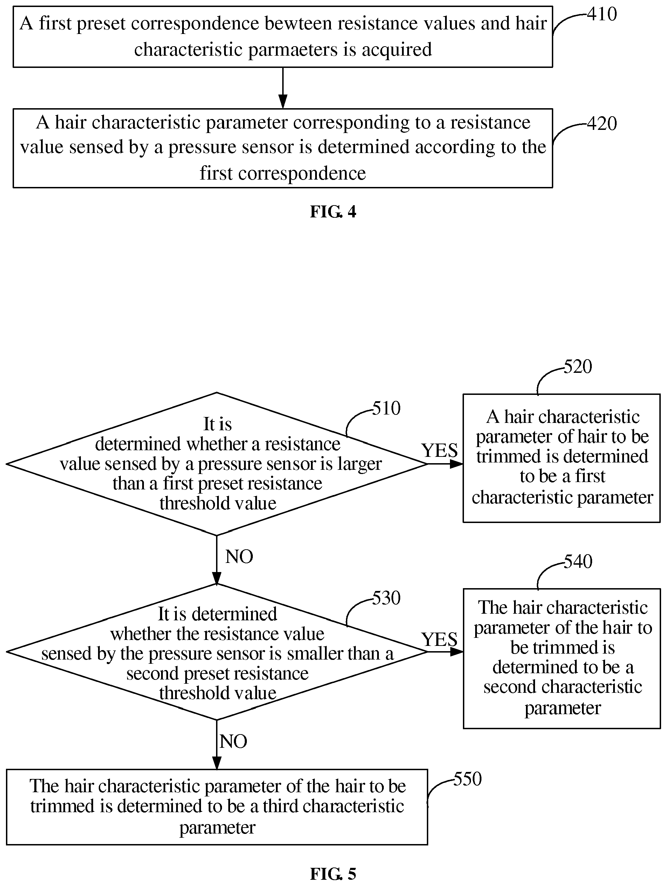

As illustrated in Fig. 4, Fig. 4 is a flow chart illustrating another method for controlling a hair trimming apparatus, according to an aspect of the present disclosure. The method for controlling the hair trimming apparatus may be applied to the hair trimming apparatus and is implemented on the basis of the method illustrated in Fig. 3, wherein the sensor is a pressure sensor, and the sensing data is a resistance value sensed by the pressure sensor. When the operation that the hair characteristic parameter of the hair to be trimmed is determined according to the sensing data in Step 320 is executed, the following Steps 410-420 may be included.

In Step 410, a first preset correspondence between resistance values and hair characteristic parameters is acquired.

In the aspect of the present disclosure, the first correspondence may be set in advance. After the hair trimming apparatus detects the hair to be trimmed through the pressure sensor to obtain the resistance value sensed by the pressure sensor, the hair trimming apparatus may directly obtain the hair density, and/or hair thickness, and/or hair hardness and the like of the hair to be trimmed according to the first correspondence.

In Step 420, the hair characteristic parameter corresponding to the resistance value sensed by the pressure sensor is determined according to the first correspondence.

From the exemplary aspect, it can be seen that the hair characteristic parameter corresponding to the resistance value sensed by the pressure sensor may be directly determined according to the first preset correspondence between the resistance value and the hair characteristic parameter, so that automatic detection efficiency of the hair trimming apparatus is improved.

As illustrated in Fig. 5, Fig. 5 is a flow chart illustrating another method for controlling a hair trimming apparatus, according to an aspect of the present disclosure. The method for controlling the hair trimming apparatus may be applied to the hair trimming apparatus and is implemented on the basis of the method illustrated in Fig. 3, wherein the sensor is a pressure sensor, and the sensing data is a resistance value sensed by the pressure sensor. When the operation that the hair characteristic parameter of the hair to be trimmed is determined according to the sensing data in Step 320 is executed, the following Steps 510-520 may be included.

In Step 510, it is determined whether the resistance value sensed by the pressure sensor is larger (i.e., greater) than a first preset resistance threshold value, if YES, Step 520 is executed, and if NO, Step 530 is executed.

In the aspect of the present disclosure, the first preset resistance threshold value may be set in advance and is configured to distinguish different hair characteristic parameters. Moreover, when the resistance value sensed by the pressure sensor is larger than the first preset resistance threshold value, it is indicated that the resistance value sensed by the pressure sensor is larger, and also indicated that the hair density, and/or hair thickness, and/or hair hardness and the like of the hair to be trimmed are also higher, and the hair characteristic parameter of the hair to be trimmed is defined as a first characteristic parameter.

In Step 520, the hair characteristic parameter of the hair to be trimmed is determined to be the first characteristic parameter.

In Step 530, it is determined whether the resistance value is smaller (i.e., less) than a second preset resistance threshold value, and the second preset resistance threshold value is smaller than the first preset resistance threshold value. If YES, Step 540 is executed, and if NO, Step 550 is executed.

In the aspect of the present disclosure, the second preset resistance threshold value may be set in advance and is configured to distinguish different hair characteristic parameters. Moreover, when the resistance value sensed by the pressure sensor is smaller than the second preset resistance threshold value, it is indicated that the resistance value sensed by the pressure sensor is smaller, and also indicated that the hair density, and/or hair thickness, and/or hair hardness and the like of the hair to be trimmed are also smaller, and the hair characteristic parameter of the hair to be trimmed is defined as a second characteristic parameter. When the resistance value sensed by the pressure sensor is between the first preset resistance threshold value and the second preset resistance threshold value, the hair characteristic parameter of the hair to be trimmed may be defined as a third characteristic parameter.

In Step 540, the hair characteristic parameter of the hair to be trimmed is determined to be the second characteristic parameter.

In Step 550, the hair characteristic parameter of the hair to be trimmed is determined to be the third characteristic parameter.

From the exemplary aspect, it can be seen that the resistance value sensed by the pressure sensor is compared with the first preset resistance threshold value and the second preset resistance threshold value, and different characteristic parameters are determined according to different comparison results, so that the automatic detection efficiency of the hair trimming apparatus is improved.

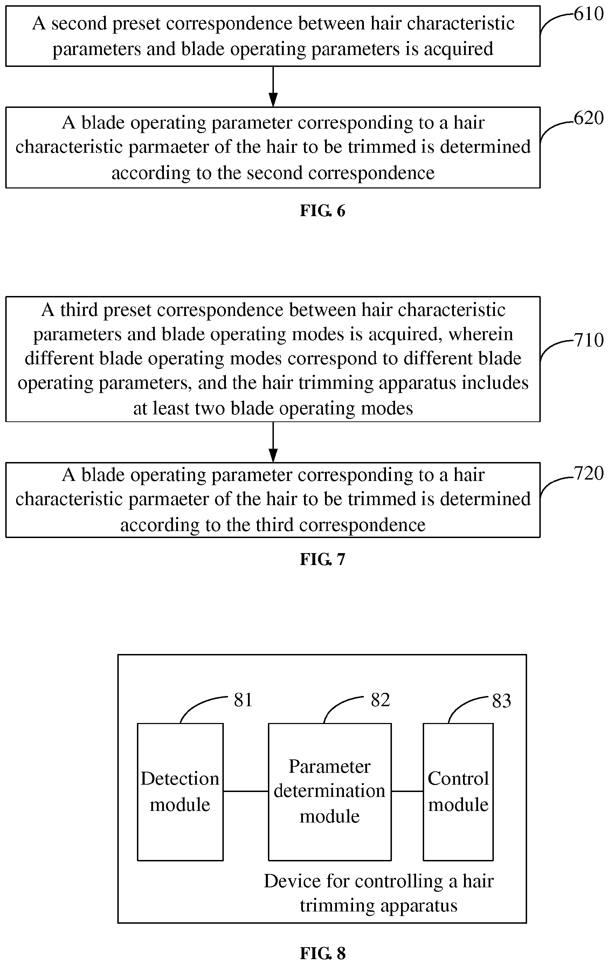

As illustrated in Fig. 6, Fig. 6 is a flow chart illustrating another method for controlling a hair trimming apparatus, according to an aspect of the present disclosure. The method for controlling the hair trimming apparatus may be applied to the hair trimming apparatus and is implemented on the basis of the methods illustrated in Fig. 1 to Fig. 5. When Step 120 is executed, as illustrated in Fig. 6, the method may include the following Steps 610-620.

In Step 610, a second preset correspondence between hair characteristic parameters and blade operating parameters is acquired.

In the aspect of the present disclosure, the second correspondence may be set in advance. After the hair trimming apparatus detects the hair characteristic parameter of the hair to be trimmed, the blade rotating speed, and/or the blade rotating duration, and/or the blade sharpness and the like may be directly obtained according to the second correspondence.

In Step 620, the blade operating parameter corresponding to the hair characteristic parameter of the hair to be trimmed is determined according to the second correspondence.

From the exemplary aspect, it can be seen that the second preset correspondence between the hair characteristic parameter and the blade operating parameter may be acquired and the blade operating parameter corresponding to the hair characteristic parameter of the hair to be trimmed is determined according to the second correspondence, so that infinite adjustment of the hair trimming apparatus is implemented, different requirements of the user are met, and the user's satisfaction is improved.

Fig. 7 is a flow chart illustrating another method for controlling a hair trimming apparatus, according to an aspect of the present disclosure. The method for controlling the hair trimming apparatus may be applied to the hair trimming apparatus and is implemented on the basis of the methods illustrated in Fig. 1 to Fig. 5. When Step 120 is executed, as illustrated in Fig. 7, the method may include the following Steps 710-720.

In Step 710, a third preset correspondence between hair characteristic parameters and blade operating modes is acquired, wherein different blade operating modes correspond to different blade operating parameters, and the hair trimming apparatus includes at least two blade operating modes.

In the aspect of the present disclosure, the blade operating parameter may include, but not limited to, the blade rotating speed, and/or the blade rotating duration, and/or the blade sharpness and the like.

For example, the hair trimming apparatus has multiple types of blades. Since the blades are excessively sharp and may easily hurt skin of a user, for example, when the hair hardness is not so high, a blade with low sharpness may be preferably selected.

In addition, a blade rotating mode may involve multiple blade operating parameters. For example, in one mode, a rotating speed is high but the blade is not so sharp (it may be a high/medium/low-rotating speed mode).

In Step 720, a blade operating parameter corresponding to the hair characteristic parameter of the hair to be trimmed is determined according to the third correspondence.

From the exemplary aspect, it can be seen that the third preset correspondence between the hair characteristic parameter and the blade operating mode is acquired and the blade operating parameter corresponding to the hair characteristic parameter of the hair to be trimmed is determined according to the third correspondence, so that gear shifting adjustment of the hair trimming apparatus is implemented, different requirements of the user are met, and the user's satisfaction is improved.

Correspondingly to the aspects of the method for controlling the hair trimming apparatus, the present disclosure further provides an aspect of a device for controlling a hair trimming apparatus, which is configured to execute the method for controlling the hair trimming apparatus mentioned above.

As illustrated in Fig. 8, Fig. 8 is a block diagram of a device for controlling a hair trimming apparatus, according to an aspect of the present disclosure. The device may be applied to the hair trimming apparatus, and is configured to execute a method for controlling the hair trimming apparatus illustrated in Fig. 1. The device may include a detection module 81, a parameter determination module 82 and a control module 83.

The detection module 81 may be configured to detect a hair characteristic parameter of hair to be trimmed, wherein the hair characteristic parameter is configured to represent a characteristic of the hair to be trimmed.

The parameter determination module 82 may be configured to determine a blade operating parameter of the hair trimming apparatus for trimming the hair to be trimmed according to the hair characteristic parameter.

The control module 83 may be configured to control a blade of the hair trimming apparatus to operate according to the blade operating parameter to trim the hair to be trimmed.

From the exemplary aspect, it can be seen that: the hair characteristic parameter of the hair to be trimmed is detected, the blade operating parameter of the hair trimming apparatus for trimming the hair to be trimmed is determined according to the hair characteristic parameter of the hair to be trimmed, the blade of the hair trimming apparatus is controlled to operate according to the determined blade operating parameter to trim the hair to be trimmed, and then the hair trimming apparatus may automatically adjust a proper blade operating parameter for operation according to the hair characteristic parameter of the hair to be trimmed, so that hair trimming efficiency is improved, resource loss is also reduced, and satisfaction of a user is also improved.

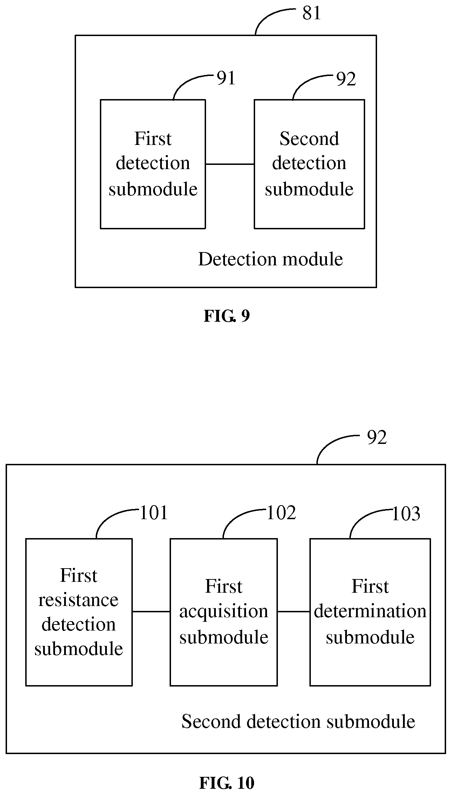

As illustrated in Fig. 9, Fig. 9 is a block diagram of another device for controlling a hair trimming apparatus, according to an aspect of the present disclosure. The device may be applied to the hair trimming apparatus and is implemented on the basis of the device illustrated in Fig. 8. The detection module 81 may include at least one of a first detection submodule 91 or a second detection submodule 92.

The first detection submodule 91 may be configured to capture an image of the hair to be trimmed through a camera to obtain a hair picture and perform image analysis on the hair picture to obtain the hair characteristic parameter of the hair to be trimmed.

The second detection submodule 92 may be configured to detect the hair to be trimmed through a sensor to obtain sensing data and determine the hair characteristic parameter of the hair to be trimmed according to the sensing data.

From the exemplary aspect, it can be seen that: the hair to be trimmed may be photographed through the camera to obtain the hair picture; image analysis is performed on the obtained hair picture to obtain the hair characteristic parameter of the hair to be trimmed, and/or the hair to be trimmed is detected through the sensor to obtain the sensing data, and the hair characteristic parameter of the hair to be trimmed is determined according to the obtained sensing data. Therefore, implementation modes for detecting the hair characteristic parameter of the hair to be trimmed are enriched, and automatic detection efficiency of the hair trimming apparatus is further improved.

As illustrated in Fig. 10, Fig. 10 is a block diagram of another device for controlling a hair trimming apparatus, according to an aspect of the present disclosure. The device may be applied to the hair trimming apparatus and is implemented on the basis of the device illustrated in Fig. 9. The sensor is a pressure sensor, and the sensing data is a resistance value sensed by the pressure sensor. The second detection submodule 92 may include a first resistance value detection submodule 101, a first acquisition submodule 102 and a first determination submodule 103.

The first resistance value detection submodule 101 may be configured to detect the hair to be trimmed through the pressure sensor to obtain the resistance value sensed by the pressure sensor.

The first acquisition submodule 102 may be configured to acquire a first preset correspondence between resistance values and hair characteristic parameters.

The first determination submodule 103 may be configured to determine the hair characteristic parameter corresponding to the resistance value sensed by the pressure sensor according to the first correspondence.

From the exemplary aspect, it can be seen that the characteristic parameter corresponding to the resistance value sensed by the pressure sensor may be directly determined according to the first preset correspondence between the resistance value and the hair characteristic parameter, so that automatic detection efficiency of the hair trimming apparatus is improved.

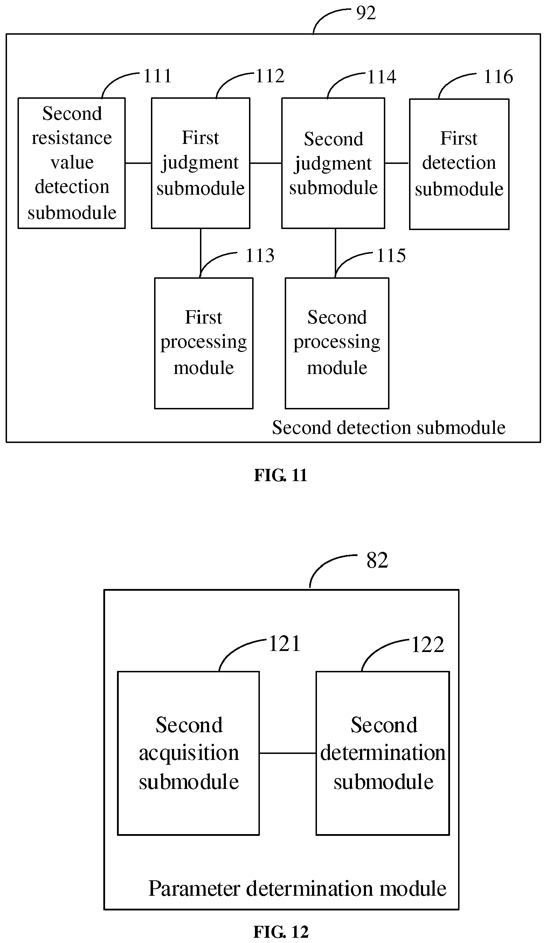

As illustrated in Fig. 11, Fig. 11 is a block diagram of another device for controlling a hair trimming apparatus, according to an aspect of the present disclosure. The device may be applied to the hair trimming apparatus and is implemented on the basis of the device illustrated in Fig. 9. The sensor is a pressure sensor, and the sensing data is a resistance value sensed by the pressure sensor. The second detection submodule 92 may include a second resistance value detection submodule 111, a first judgment submodule 112, a first processing module 113, a second judgment submodule 114, a second processing module 115 and a third processing module 116.

The second resistance value detection submodule 111 may be configured to detect the hair to be trimmed through the pressure sensor to obtain the resistance value sensed by the pressure sensor.

The first judgment submodule 112 may be configured to determine whether the resistance value is larger than a first preset resistance threshold value.

The first processing module 113 may be configured to, when the first judgment submodule 112 determines that the resistance value is larger than the first preset resistance threshold value, determine the hair characteristic parameter of the hair to be trimmed to be a first characteristic parameter.

The second judgment submodule 114 may be configured to, when the first judgment submodule determines that the resistance value is not larger than the first preset resistance threshold value, determine whether the resistance value is smaller than a second preset resistance threshold value, wherein the second preset resistance threshold value is smaller than the first preset resistance threshold value.

The second processing module 115 may be configured to, when the second judgment submodule 114 determines that the resistance value is smaller than the second preset resistance threshold value, determine the hair characteristic parameter of the hair to be trimmed to be a second characteristic parameter.

The third processing module 116 may be configured to, when the second judgment submodule 114 determines that the resistance value is not smaller than the second preset resistance threshold value, determine the hair characteristic parameter of the hair to be trimmed to be a third characteristic parameter.

From the exemplary aspect, it can be seen that the resistance value sensed by the pressure sensor is compared with the first preset resistance threshold value and the second preset resistance threshold value, and different characteristic parameters are determined according to different comparison results, so that the automatic detection efficiency of the hair trimming apparatus is improved.

As illustrated in Fig. 12, Fig. 12 is a block diagram of another device for controlling a hair trimming apparatus, according to an aspect of the present disclosure. The device may be applied to the hair trimming apparatus and is implemented on the basis of the device illustrated in any one of Fig. 8 to Fig. 11. The parameter determination module 82 may include a second acquisition submodule 121 and a second determination submodule 122.

The second acquisition submodule 121 may be configured to acquire a second preset correspondence between hair characteristic parameters and blade operating parameters.

The second determination submodule 122 may be configured to determine the blade operating parameter corresponding to the hair characteristic parameter of the hair to be trimmed according to the second correspondence.

From the exemplary aspect, it can be seen that the second preset correspondence between the hair characteristic parameter and the blade operating parameter may be acquired and the blade operating parameter corresponding to the hair characteristic parameter of the hair to be trimmed may be determined according to the second correspondence, so that infinite adjustment of the hair trimming apparatus is implemented, different requirements of the user are met, and the satisfaction of the user is improved.

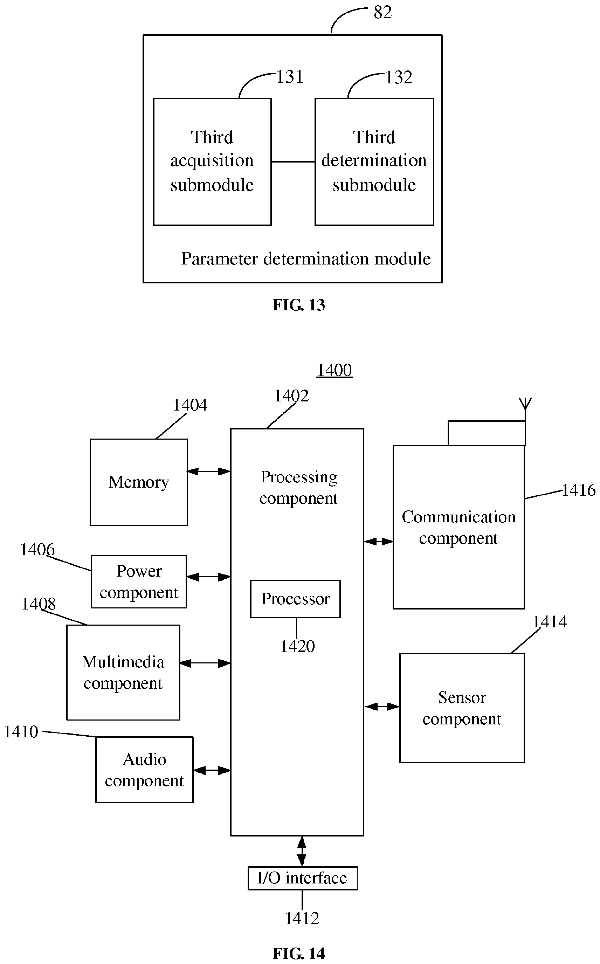

As illustrated in Fig. 13, Fig. 13 is a block diagram of another device for controlling a hair trimming apparatus, according to an aspect of the present disclosure. The device may be applied to the hair trimming apparatus and is implemented on the basis of the device illustrated in any one of Fig. 8 to Fig. 11. The parameter determination module 82 may include a third acquisition submodule 131 and a third determination submodule 132.

The third acquisition submodule 131 may be configured to acquire a third preset correspondence between hair characteristic parameters and blade operating modes, wherein different blade operating modes correspond to different blade operating parameters, and the hair trimming apparatus includes at least two blade operating modes.

The third determination submodule 132 may be configured to determine a blade operating mode corresponding to the hair characteristic parameter of the hair to be trimmed according to the third correspondence.

From the exemplary aspect, it can be seen that the third preset correspondence between the hair characteristic parameter and the blade operating parameter may be acquired and the blade operating parameter corresponding to the hair characteristic parameter of the hair to be trimmed may be determined according to the third correspondence, so that gear shifting adjustment of the hair trimming apparatus is implemented, different requirements of the user are met, and the satisfaction of the user is improved.

Details about realization processes of functions and effects of each unit in the device refer to implementation processes of the corresponding steps in the method and will not be elaborated herein.

Since the device aspect substantially corresponds to the method aspect, so that related parts refer to part of descriptions of the method aspect. The device aspect described above is merely schematic, wherein the units described as separate parts may or may not be physically separated, and the parts displayed as units may or may not be physical units, and namely may be located in the same place, or may also be distributed to multiple network units. Part or all of the units may be selected to achieve the purpose of the solutions of the present disclosure according to a practical requirement. Those of ordinary skilled in the art may understand and implement the present disclosure without creative work.

The present disclosure further provides hair trimming apparatus, which is characterized by including a device for controlling the hair trimming apparatus in any one of Fig. 8 to Fig. 13.

The present disclosure further provides a control device for hair trimming apparatus, which is applied to the hair trimming apparatus. The device may include a processor and a memory.

The memory may be configured to store an instruction executable for the processor.

The processor may be configured to:
detect a hair characteristic parameter of hair to be trimmed, wherein the hair characteristic parameter is configured to represent a characteristic of the hair to be trimmed;
determine a blade operating parameter of the hair trimming apparatus for trimming the hair to be trimmed according to the hair characteristic parameter; and
control a blade of the hair trimming apparatus to operate according to the blade operating parameter to trim the hair to be trimmed.

The present disclosure further provides a computer-readable storage medium, which is characterized in that a computer instruction is stored on the storage medium, and the instruction may be executed by a processor to implement the steps of a method for controlling the hair trimming apparatus in any one of Fig. 1 to Fig. 7.

Fig. 14 is a block diagram of a device 1400 for controlling a hair trimming apparatus, according to an aspect. For example, the device 1400 may be a mobile phone, a computer, a digital broadcast terminal, a messaging device, a gaming console, a tablet, a medical device, an exercise apparatus, a personal digital assistant, a hair trimming apparatus and the like.

Referring to Fig. 14, the device 1400 may include one or more of the following components: a processing component 1402, a memory 1404, a power component 1406, a multimedia component 1408, an audio component 1410, an Input/Output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the abovementioned information processing method. Moreover, the processing component 1402 may include one or more modules which facilitate interaction between the processing component 1402 and the other components. For instance, the processing component 1402 may include a multimedia module to facilitate interaction between the multimedia component 1408 and the processing component 1402.

The memory 1404 may be configured to store various types of data to support the operation of the device 1400. Examples of such data include instructions for any application programs or methods operated on the device 1400, contact data, phonebook data, messages, pictures, video, etc. The memory 1404 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1406 provides power for various components of the device 1400. The power component 1406 may include a power management system, one or more power supplies, and other components associated with the generation, management and distribution of power for the device 1400.

The multimedia component 1408 includes a screen providing an output interface between the device 1400 and a user. In some aspects, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some aspects, the multimedia component 1408 includes a front camera and/or a rear camera. The front camera and/or the rear camera may receive external multimedia data when the device 1400 is in an operation mode, such as a photographing mode or a video mode. Each of the front camera and the rear camera may be a fixed optical lens system or have focusing and optical zooming capabilities.

The audio component 1410 may be configured to output and/or input an audio signal. For example, the audio component 1410 includes a Microphone (MIC), and the MIC is configured to receive an external audio signal when the device 1400 is in the operation mode, such as a call mode, a recording mode and a voice recognition mode. The received audio signal may be further stored in the memory 1404 or sent through the communication component 1416. In some aspects, the audio component 1410 further includes a speaker configured to output the audio signal.

The I/O interface 1412 provides an interface between the processing component 1402 and a peripheral interface module, and the peripheral interface module may be a keyboard, a click wheel, a button and the like. The button may include, but not limited to: a home button, a volume button, a starting button and a locking button.

The sensor component 1414 includes one or more sensors configured to provide status assessment in various aspects for the device 1400. For instance, the sensor component 1414 may detect an on/off status of the device 1400 and relative positioning of components, such as a display and small keyboard of the device 1400, and the sensor component 1414 may further detect a change in a position of the device 1400 or a component of the device 1400, presence or absence of contact between the user and the device 1400, orientation or acceleration/deceleration of the device 1400 and a change in temperature of the device 1400. The sensor component 1414 may include a proximity sensor configured to detect presence of an object nearby without any physical contact. The sensor component 1414 may also include a light sensor, such as a Complementary Metal Oxide Semiconductor (CMOS) or Charge Coupled Device (CCD) image sensor, configured for use in an imaging application. In some aspects, the sensor component 1414 may also include an acceleration sensor, a gyroscope sensor, a magnetic sensor, a pressure sensor or a temperature sensor.

The communication component 1416 may be configured to facilitate wired or wireless communication between the device 1400 and other equpment. The device 1400 may access a communication-standard-based wireless network, such as a Wireless Fidelity (WiFi) network, a 2nd-Generation (2G) or 3rd-Generation (3G) network or a combination thereof. In an aspect, the communication component 1416 receives a broadcast signal or broadcast associated information from an external broadcast management system through a broadcast channel. In an aspect, the communication component 1416 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology and another technology.

In an aspect, the device 1400 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an aspect, there is also provided a non-transitory computer-readable storage medium including an instruction, such as the memory 1404 including an instruction, and the instruction may be executed by the processor 1420 of the device 1400 to implement the abovementioned information processing method. For example, the non-transitory computer-readable storage medium may be a ROM, a Random Access Memory (RAM), a Compact Disc Read-Only Memory (CD-ROM), a magnetic tape, a floppy disc, an optical data storage apparatus and the like.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

The technical solutions provided by the aspects of the present disclosure may have the following beneficial effects.

According to the hair trimming apparatus in the present disclosure, the hair characteristic parameter of the hair to be trimmed is detected, the blade operating parameter of the hair trimming apparatus for trimming the hair to be trimmed is determined based on the hair characteristic parameter of the hair to be trimmed, the blade of the hair trimming apparatus is controlled to execute operation based on the determined blade operating parameter to trim the hair to be trimmed, and then the hair trimming apparatus may automatically adjust a proper blade operating parameter for operation based on the hair characteristic parameter of the hair to be trimmed, so that hair trimming efficiency is improved, resource loss is also reduced, and satisfaction of a user is also improved.

According to the hair trimming apparatus in the present disclosure, the image of the hair to be trimmed may also be captured through the camera to obtain the hair picture; image analysis is performed on the obtained hair picture to obtain the hair characteristic parameter of the hair to be trimmed; and/or the hair to be trimmed is detected through the sensor to obtain the sensing data, and the hair characteristic parameter of the hair to be trimmed is determined based on the obtained sensing data. Therefore, implementation modes for detecting the hair characteristic parameter of the hair to be trimmed are enriched, and automatic detection efficiency of the hair trimming apparatus is further improved.

According to the hair trimming apparatus in the present disclosure, the hair characteristic parameter corresponding to the resistance value sensed by the pressure sensor may further be directly determined based on the first preset correspondence between the resistance value and the hair characteristic parameter, so that the automatic detection efficiency of the hair trimming apparatus is improved.

According to the hair trimming apparatus in the present disclosure, the resistance value sensed by the pressure sensor may further be compared with the first preset resistance threshold value and the second preset resistance threshold value, and different characteristic parameters are determined based on different comparison results, so that the automatic detection efficiency of the hair trimming apparatus is improved.

According to the hair trimming apparatus in the present disclosure, the second preset correspondence between the hair characteristic parameter and the blade operating parameter may further be acquired and the blade operating parameter corresponding to the hair characteristic parameter of the hair to be trimmed is determined based on the second correspondence, so that infinite adjustment of the hair trimming apparatus is implemented, different requirements of the user are met, and the user's satisfaction is improved.

According to the hair trimming apparatus in the present disclosure, the third preset correspondence between the hair characteristic parameter and the blade operating mode may further be acquired and the blade operating parameter corresponding to the hair characteristic parameter of the hair to be trimmed is determined based on the third correspondence, so that gear shifting adjustment of the hair trimming apparatus is implemented, different requirements of the user are met, and the user's satisfaction is improved.

Other aspects of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and aspects be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for controlling a hair trimming apparatus, wherein the method comprises:
detecting (110) a hair characteristic parameter of hair to be trimmed, wherein the hair characteristic parameter represents a characteristic of the hair;
determining (120) a blade operating parameter of the hair trimming apparatus for trimming the hair based on the hair characteristic parameter; and
controlling (130) a blade of the hair trimming apparatus to operate based on the blade operating parameter to trim the hair,
wherein detecting (110) the hair characteristic parameter of the hair comprises:
acquiring (320) sensing data by detecting the hair via a sensor, and determining the hair characteristic parameter of the hair based on the sensing data;
**characterized in that** the sensor is a pressure sensor, the sensing data is a resistance value sensed by the pressure sensor, and
determining (110) the hair characteristic parameter of the hair based on the sensing data comprises:
detecting the hair via the pressure sensor to obtain the resistance value sensed by the pressure sensor;
acquiring (410) a first preset correspondence between resistance values and hair characteristic parameters; and
determining (420) the hair characteristic parameter corresponding to the resistance value sensed by the pressure sensor based on the first correspondence;
or,
determining (110) the hair characteristic parameter of the hair based on the sensing data comprises:
detecting the hair via the pressure sensor to obtain the resistance value sensed by the pressure sensor;
determining (510) whether the resistance value sensed by the pressure sensor is greater than a first preset resistance threshold value;
when the resistance value is greater than the first preset resistance threshold value, determining (520) the hair characteristic parameter of the hair to be a first characteristic parameter;
when the resistance value is not greater than the first preset resistance threshold value, determining (530) whether the resistance value is less than a second preset resistance threshold value, wherein the second preset resistance threshold value is less than the first preset resistance threshold value;
when the resistance value is less than the second preset resistance threshold value, determining (540) the hair characteristic parameter of the hair to be a second characteristic parameter; and
when the resistance value is not less than the second preset resistance threshold value, determining (550) the hair characteristic parameter of the hair to be a third characteristic parameter.

2. The method of claim 1, wherein determining (120) the blade operating parameter of the hair trimming apparatus for trimming the hair based on the hair characteristic parameter comprises:
acquiring (610) a second preset correspondence between hair characteristic parameters and blade operating parameters; and
determining (620) the blade operating parameter corresponding to the hair characteristic parameter of the hair based on the second correspondence.

3. The method of claim 1, wherein determining (120) the blade operating parameter of the hair trimming apparatus for trimming the hair based on the hair characteristic parameter comprises:
acquiring (710) a third preset correspondence between hair characteristic parameters and blade operating modes, wherein different blade operating modes correspond to different blade operating parameters, and the hair trimming apparatus comprises at least two blade operating modes; and
determining (720) a blade operating mode corresponding to the hair characteristic parameter of the hair based on the third correspondence.

4. The method of any one of claims 1-3, wherein the characteristic of the hair comprises at least one of a hair density, a hair thickness or a hair hardness, and
wherein the blade operating parameter comprises at least one of a blade rotating speed, a blade rotating duration or blade sharpness.

5. A hair trimming apparatus, comprising:
a detection module (81), configured to detect a hair characteristic parameter of hair to be trimmed, wherein the hair characteristic parameter represents a characteristic of the hair;
a parameter determination module (82), configured to determine a blade operating parameter of the hair trimming apparatus for trimming the hair based on the hair characteristic parameter;
a control module (83), configured to control a blade of the hair trimming apparatus to operate based on the blade operating parameter to trim the hair; and
**characterized by** a sensor, wherein the sensor is a pressure sensor and the sensing data is a resistance value sensed by the pressure sensor,
wherein the detection module (81) comprises: a detection submodule (92), configured to acquire sensing data by detecting the hair via the sensor and determine the hair characteristic parameter of the hair based on the sensing data;
wherein the detection submodule (92) comprises:
a first resistance value detection submodule (101), configured to detect the hair via the pressure sensor to obtain the resistance value sensed by the pressure sensor;
a first acquisition submodule (102), configured to acquire a first preset correspondence between resistance values and hair characteristic parameters; and
a first determination submodule (103), configured to determine the hair characteristic parameter corresponding to the resistance value sensed by the pressure sensor based on the first correspondence;
or,
the detection submodule (92) comprises:
a second resistance value detection submodule (111), configured to detect the hair via the pressure sensor to obtain the resistance value sensed by the pressure sensor;
a first judgment submodule (112), configured to determine whether the resistance value is greater than a first preset resistance threshold value;
a first processing module (113), configured to, when the resistance value is greater than the first preset resistance threshold value, determine the hair characteristic parameter of the hair to be a first characteristic parameter;
a second judgment submodule (114), configured to, when the resistance value is not greater than the first preset resistance threshold value, determine whether the resistance value is less than a second preset resistance threshold value, wherein the second preset resistance threshold value is less than the first preset resistance threshold value;
a second processing module (115), configured to, when the resistance value is less than the second preset resistance threshold value, determine the hair characteristic parameter of the hair to be a second characteristic parameter; and
a third processing module (116), configured to, when the resistance value is not less than the second preset resistance threshold value, determine the hair characteristic parameter of the hair to be a third characteristic parameter.

6. The hair trimming apparatus of claim 5, wherein the parameter determination module (82) comprises:
a second acquisition submodule (121), configured to acquire a second preset correspondence between hair characteristic parameters and blade operating parameters; and
a second determination submodule (122), configured to determine the blade operating parameter corresponding to the hair characteristic parameter of the hair based on the second correspondence.

7. The hair trimming apparatus of claim 5, wherein the parameter determination module (82) comprises:
a third acquisition submodule (131), configured to acquire a third preset correspondence between hair characteristic parameters and blade operating modes, wherein different blade operating modes correspond to different blade operating parameters, and the hair trimming apparatus comprises at least two blade operating modes; and
a third determination submodule (132), configured to determine a blade operating mode corresponding to the hair characteristic parameter of the hair based on the third correspondence.

8. The hair trimming apparatus of any one of claims 5-7, wherein the characteristic of the hair comprises at least one of a hair density, a hair thickness or a hair hardness, and wherein the blade operating parameter comprises at least one of a blade rotating speed, a blade rotating duration or blade sharpness.

9. A computer-readable storage medium, on which a computer instruction is stored, the instruction being executed by a processor in combination with the apparatus of any one of claims 5-8 to implement operations of the method for controlling the hair trimming apparatus of any one of claims 1-4.

## Patentansprüche

1. Verfahren zur Steuerung einer Haartrimmvorrichtung, wobei das Verfahren umfasst:
Detektieren (110) eines Haarmerkmalsparameters des zu trimmenden Haars, wobei der Haarmerkmalsparameter ein Merkmal der Haare darstellt;
Bestimmen (120) eines Klingenbetätigungsparameters der Haartrimmvorrichtung zum Trimmen der Haare basierend auf dem Haarmerkmalsparameter; und
Steuern (130) einer Klinge der Haartrimmvorrichtung, so dass diese basierend auf dem Klingenbetätigungsparameter zum Trimmen der Haare betätigt wird,
wobei das Detektieren (110) des Haarmerkmalsparameters der Haare umfasst:
Erfassen (320) von Sensordaten durch Detektieren der Haare über einen Sensor und Bestimmen des Haarmerkmalsparameters der Haare basierend auf den Sensordaten;
**dadurch gekennzeichnet, dass** der Sensor ein Drucksensor ist, die Sensordaten ein von dem Drucksensor sensierter Widerstandswert sind, und
wobei das Bestimmen (110) des Haarmerkmalsparameters der Haare basierend auf den Sensordaten umfasst:
Detektieren der Haare über den Drucksensor, um den von dem Drucksensor sensierten Widerstandswert zu erhalten;
Erfassen (410) einer ersten voreingestellten Korrespondenz zwischen Widerstandswerten und Haarmerkmalsparametern; und
Bestimmen (420) des Haarmerkmalsparameters entsprechend dem von dem Drucksensor sensierten Widerstandswert basierend auf der ersten Korrespondenz; oder
wobei das Bestimmen (110) des Haarmerkmalsparameters der Haare basierend auf den Sensierdaten umfasst:
Detektieren der Haare über den Drucksensor, um den von dem Drucksensor sensierten Widerstandswert zu erhalten;
Bestimmen (510), ob der von dem Drucksensor sensierte Widerstandswert größer als ein erster voreingestellter Widerstandschwellenwert ist;
wenn der Widerstandswert größer als der erste voreingestellte Widerstandsschwellenwert ist, dann Bestimmen (520) des Haarmerkmalsparameters der Haare als einen ersten Merkmalsparameter;
wenn der Widerstandswert nicht größer als der erste voreingestellte Widerstandschwellenwert ist, dann Bestimmen (530), ob der Widerstandswert geringer als ein zweiter voreingestellter Widerstandsschwellenwert ist, wobei der zweite voreingestellte Widerstandsschwellenwert geringer als der erste voreingestellte Widerstandsschwellenwert ist;
wenn der Widerstandswert geringer als der zweite voreingestellte Widerstandsschwellenwert ist, dann Bestimmen (540) des Haarmerkmalsparameters der Haare als einen zweiten Merkmalsparameter; und
wenn der Widerstandswert nicht geringer als der zweite voreingestellte Widerstandschwellenwert ist, dann Bestimmen (550) des Haarmerkmalsparameters der Haare als einen dritten Merkmalsparameter.

2. Verfahren nach Anspruch 1, wobei das Bestimmen (120) des Klingenbetätigungsparameters der Haartrimmvorrichtung zum Trimmen der Haare basierend auf dem Haarmerkmalsparameter umfasst:
Erfassen (610) einer zweiten voreingestellten Korrespondenz zwischen den Haarmerkmalsparametern und den Klingenbetätigungsparametern; und
Bestimmen (620) des Klingenbetätigungsparameters entsprechend dem Haarmerkmalsparameter der Haare basierend auf der zweiten Korrespondenz.

3. Verfahren nach Anspruch 1, wobei das Bestimmen (120) des Klingenbetätigungsparameters der Haartrimmvorrichtung zum Trimmen der Haare basierend auf dem Haarmerkmalsparameter umfasst:
Erfassen (710) einer dritten voreingestellten Korrespondenz zwischen den Haarmerkmalsparametern und den Klingenbetätigungsmodi, wobei unterschiedliche Klingenbetätigungsmodi unterschiedlichen Klingenbetätigungsparametern entsprechen, und wobei die Haartrimmvorrichtung mindestens zwei Klingenbetätigungsmodi aufweist; und
Bestimmen (720) eines Klingenbetätigungsmodus entsprechend dem Haarmerkmalsparameter basierend auf der dritten Korrespondenz.

4. Verfahren nach einem der Ansprüche 1-3, wobei das Merkmale der Haare mindestens eines umfasst aus einer Haardichte, einer Haardicke oder einer Haarhärte, und
wobei der Klingenbetätigungsparameter mindestens eines aus einer Klingenrotationsgeschwindigkeit, einer Klingenrotationsdauer oder einer Klingenschärfe umfasst.

5. Haartrimmvorrichtung mit:
einem Detektionsmodul (81), das zum Detektieren eines Haarmerkmalsparameters von zu trimmenden Haaren ausgebildet ist, wobei der Haarmerkmalsparameter ein Merkmale der Haare darstellt;
einem Parameterbestimmungsmodul (82), das zum Bestimmen eines Klingenbetätigungsparameters der Haartrimmvorrichtung zum Trimmen der Haare basierend auf dem Haarmerkmalsparameter ausgebildet ist;
einem Steuerungsmodul (83), das zum Steuern einer Klinge der Haartrimmvorrichtung zum Betätigen basierend auf dem Klingenbetätigungsparameter zum Trimmen der Haare ausgebildet ist; und
**gekennzeichnet durch** einen Sensor, wobei der Sensor ein Drucksensor ist und die Sensordaten ein von dem Drucksensor sensierter Widerstandswert sind,
wobei das Detektionsmodul (81) aufweist: ein Detektionsuntermodul (92), das zum Erfassen von Sensordaten durch Detektieren der Haare über den Sensor und zum Bestimmen des Haarmerkmalsparameters der Haare basierend auf den Sensordaten ausgebildet ist;
wobei das Detektionsuntermodul (92) aufweist:
ein erstes Widerstandswert-Detektionsuntermodul (101), das zum Detektieren der Haare über den Drucksensor ausgebildet ist, um den von dem Drucksensor sensierten Widerstandswert zu erhalten;
ein erstes Erfassungsuntermodul (102), das zum Erfassen einer ersten voreingestellten Korrespondenz zwischen Widerstandwerten und Haarmerkmalsparametern ausgebildet ist; und
ein erstes Bestimmungsuntermodul (103), das zum Bestimmen des Haarmerkmalsparameters entsprechend dem von dem Drucksensor sensierten Widerstandswert basierend auf der ersten Korrespondenz ausgebildet ist; oder
das Detektionsuntermodul (92) weist auf:
ein zweites Widerstandswert-Detektionsuntermodul (111), das zum Detektieren der Haare über den Drucksensor ausgebildet ist, um den von dem Drucksensor sensierten Widerstandswert zu erhalten;
ein erstes Beurteilungsuntermodul (112), das ausgebildet ist zum Bestimmen, ob der Widerstandswert größer als ein erster voreingestellter Widerstandsschwellenwert ist;
ein erstes Verarbeitungsmodul (113), dass, wenn der Widerstandwert größer als der erste voreingestellte Widerstandsschwellenwert ist, zum Bestimmen des Haarmerkmalsparameters der Haare als einen ersten Merkmalsparameter ausgebildet ist,
ein zweites Beurteilungsuntermodul (114), das, wenn der Widerstandswert nicht größer als der erste voreingestellte Widerstandschwellenwert ist, ausgebildet ist zum Bestimmen, ob der Widerstandswert geringer als ein zweiter voreingestellter Widerstandschwellenwert ist, wobei der zweite voreingestellte Widerstandsschwellenwert geringer als der erste voreingestellte Widerstandschwellenwert ist;
ein zweites Verarbeitungsmodul (115), das, wenn der Widerstandswert geringer als der zweite voreingestellte Widerstandschwellenwert ist, zum Bestimmen des Haarmerkmalsparameters der Haare als einen zweiten Merkmalsparameter ausgebildet ist; und
ein drittes Verarbeitungsmodul (116), das, wenn der Widerstandswert nicht geringer als der zweite voreingestellte Widerstandschwellenwert ist, zum Bestimmen des Haarmerkmalsparameters der Haare als einen dritten Merkmalsparameter ausgebildet ist.

6. Haartrimmvorrichtung nach Anspruch 5, wobei das Parameterbestimmungsmodul (82) aufweist:
ein zweites Erfassungsuntermodul (121), das zum Erfassen einer zweiten voreingestellten Korrespondenz zwischen den Haarmerkmalsparametern und den Klingenbetätigungsparametern ausgebildet ist; und
ein zweites Bestimmungsuntermodul (122), das zum Bestimmen des Klingenbetätigungsparameters entsprechend dem Haarmerkmalsparameter der Haare basierend auf der zweiten Korrespondenz ausgebildet ist.

7. Haartrimmvorrichtung nach Anspruch 5, wobei das Parameterbestimmungsmodul (82) aufweist:
ein drittes Erfassungsuntermodul (131), das zum Erfassen einer dritten voreingestellten Korrespondenz zwischen Haarmerkmalsparametern und Klingenbetätigungsmodi ausgebildet ist, wobei unterschiedliche Klingenbetätigungsmodi unterschiedlichen Klingenbetätigungsparametern entsprechen, und wobei die Haartrimmvorrichtung mindestens zwei Klingenbetätigungsmodi aufweist; und
ein drittes Bestimmungsuntermodul (132), das zum Bestimmen eines Klingenbetätigungsmodus entsprechend dem Haarmerkmalsparameter der Haare basierend auf der dritten Korrespondenz ausgebildet ist.

8. Haartrimmvorrichtung nach einem der Ansprüche 5-7, wobei das Merkmale der Haare mindestens eines umfasst aus einer Haardichte, einer Haardicke oder einer Haarhärte, und wobei der Klingenbetätigungsparameter mindestens eines umfasst aus einer Klingenrotationsgeschwindigkeit, einer Klingenrotationsdauer oder einer Klingenhärte.

9. Computerlesbares Speichermedium, auf dem ein Computerbefehl gespeichert ist, wobei der Befehl von einem Prozessor in Kombination mit der Vorrichtung nach einem der Ansprüche 5-8 ausgeführt wird, um Vorgänge des Verfahrens zum Steuern der Haartrimmvorrichtung nach einem der Ansprüche 1-4 zu implementieren.

## Revendications

1. Procédé de commande d'un appareil coupe-cheveux, dans lequel le procédé comprend le fait de:
détecter (110) un paramètre caractéristique des cheveux à couper, où le paramètre caractéristique des cheveux représente une caractéristique des cheveux;
déterminer (120) un paramètre de fonctionnement de lame de l'appareil coupe-cheveux pour couper les cheveux sur base du paramètre caractéristique des cheveux; et
commander (130) une lame de l'appareil coupe-cheveux de manière à fonctionner sur base du paramètre de fonctionnement de lame pour couper les cheveux,
dans lequel la détection (110) du paramètre caractéristique des cheveux comprend le fait de:
acquérir (320) les données de détection en détectant les cheveux par un capteur et déterminer le paramètre caractéristique des cheveux sur base des données de détection;
**caractérisé par le fait que** le capteur est un capteur de pression, les données de détection sont une valeur de résistance détectée par le capteur de pression, et
la détermination (110) du paramètre caractéristique des cheveux sur base des données de détection comprend le fait de:
détecter les cheveux par le capteur de pression pour obtenir la valeur de résistance détectée par le capteur de pression;
acquérir (410) une première correspondance préétablie entre les valeurs de résistance et les paramètres caractéristiques des cheveux; et
déterminer (420) le paramètre caractéristique des cheveux correspondant à la valeur de résistance détectée par le capteur de pression sur base de la première correspondance;
ou
la détermination (110) du paramètre caractéristique des cheveux sur base des données de détection comprend le fait de:
détecter les cheveux par le capteur de pression pour obtenir la valeur de résistance détectée par le capteur de pression;
déterminer (510) si la valeur de résistance détectée par le capteur de pression est supérieure à une première valeur de seuil de résistance préétablie;
lorsque la valeur de résistance est supérieure à la première valeur de seuil de résistance préétablie, déterminer (520) le paramètre caractéristique des cheveux comme étant un premier paramètre caractéristique;
lorsque la valeur de résistance n'est pas supérieure à la première valeur de seuil de résistance préétablie, déterminer (530) si la valeur de résistance est inférieure à une deuxième valeur de seuil de résistance préétablie, où la deuxième valeur de seuil de résistance préétablie est inférieure à la première valeur de seuil de résistance préétablie;
lorsque la valeur de résistance est inférieure à la deuxième valeur de seuil de résistance préétablie, déterminer (540) le paramètre caractéristique des cheveux comme étant un deuxième paramètre caractéristique; et
lorsque la valeur de résistance n'est pas inférieure à la deuxième valeur de seuil de résistance préétablie, déterminer (550) le paramètre caractéristique des cheveux comme étant un troisième paramètre caractéristique.

2. Procédé selon la revendication 1, dans lequel la détermination (120) du paramètre de fonctionnement de lame de l'appareil coupe-cheveux pour couper les cheveux sur base du paramètre caractéristique des cheveux comprend le fait de:
acquérir (610) une deuxième correspondance préétablie entre les paramètres caractéristiques des cheveux et les paramètres de fonctionnement de lame; et
déterminer (620) le paramètre de fonctionnement de lame correspondant au paramètre caractéristique des cheveux sur base de la deuxième correspondance.

3. Procédé selon la revendication 1, dans lequel la détermination (120) du paramètre de fonctionnement de lame de l'appareil coupe-cheveux pour couper les cheveux sur base du paramètre caractéristique des cheveux comprend le fait de:
acquérir (710) une troisième correspondance préétablie entre les paramètres caractéristiques des cheveux et les modes de fonctionnement de lame, où différents modes de fonctionnement de lame correspondent à différents paramètres de fonctionnement de lame, et l'appareil coupe-cheveux comprend au moins deux modes de fonctionnement de lame; et
déterminer (720) un mode de fonctionnement de lame correspondant au paramètre caractéristique des cheveux sur base de la troisième corresponda nce.

4. Procédé selon l'une quelconque des revendications 1 à 3, dans lequel la caractéristique des cheveux comprend au moins l'une parmi une densité de cheveux, une épaisseur de cheveux ou une dureté de cheveux, et
dans lequel le paramètre de fonctionnement de lame comprend au moins l'une parmi une vitesse de rotation de lame, une durée de rotation de lame ou une qualité de tranchant de lame.

5. Appareil coupe-cheveux, comprenant:
un module de détection (81) configuré pour détecter un paramètre caractéristique des cheveux à couper, où le paramètre caractéristique des cheveux représente une caractéristique des cheveux;
un module de détermination de paramètre (82) configuré pour déterminer un paramètre de fonctionnement de lame de l'appareil coupe-cheveux pour couper les cheveux sur base du paramètre caractéristique des cheveux;
un module de commande (83) configuré pour commander une lame de l'appareil coupe-cheveux de manière à fonctionner sur base du paramètre de fonctionnement de lame pour couper les cheveux; et
**caractérisé par** un capteur, où le capteur est un capteur de pression et les données de détection sont une valeur de résistance détectée par le capteur de pression,
dans lequel le module de détection (81) comprend: un sous-module de détection (92) configuré pour acquérir les données de détection en détectant les cheveux par le capteur et pour déterminer le paramètre caractéristique des cheveux sur base des données de détection;
dans lequel le sous-module de détection (92) comprend:
un premier sous-module de détection de valeur de résistance (101) configuré pour détecter les cheveux par le capteur de pression pour obtenir la valeur de résistance détectée par le capteur de pression;
un premier sous-module d'acquisition (102) configuré pour acquérir une première correspondance préétablie entre les valeurs de résistance et les paramètres caractéristiques des cheveux; et
un premier sous-module de détermination (103) configuré pour déterminer le paramètre caractéristique des cheveux correspondant à la valeur de résistance détectée par le capteur de pression sur base de la première correspondance;
ou
le sous-module de détection (92) comprend:
un deuxième sous-module de détection de valeur de résistance (111) configuré pour détecter les cheveux par le capteur de pression pour obtenir la valeur de résistance détectée par le capteur de pression;
un premier sous-module de jugement (112) configuré pour déterminer si la valeur de résistance est supérieure à une première valeur de seuil de résistance préétablie;
un premier module de traitement (113) configuré pour déterminer, lorsque la valeur de résistance est supérieure à la première valeur de seuil de résistance préétablie, le paramètre caractéristique des cheveux comme étant un premier paramètre caractéristique;
un deuxième sous-module de jugement (114) configuré pour déterminer, lorsque la valeur de résistance n'est pas supérieure à la première valeur de seuil de résistance préétablie, si la valeur de résistance est inférieure à une deuxième valeur de seuil de résistance préétablie, où la deuxième valeur de seuil de résistance préétablie est inférieure à la première valeur de seuil de résistance préétablie;
un deuxième module de traitement (115) configuré pour déterminer, lorsque la valeur de résistance est inférieure à la deuxième valeur de seuil de résistance préétablie, le paramètre caractéristique des cheveux comme étant un deuxième paramètre caractéristique; et
un troisième module de traitement (116) configuré pour déterminer, lorsque la valeur de résistance n'est pas inférieure à la deuxième valeur de seuil de résistance préétablie, le paramètre caractéristique des cheveux comme étant un troisième paramètre caractéristique.

6. Appareil coupe-cheveux selon la revendication 5, dans lequel le module de détermination de paramètre (82) comprend:
un deuxième sous-module d'acquisition (121) configuré pour acquérir une deuxième correspondance préétablie entre les paramètres caractéristiques des cheveux et les paramètres de fonctionnement de lame; et
un deuxième sous-module de détermination (122) configuré pour déterminer le paramètre de fonctionnement de lame correspondant au paramètre caractéristique des cheveux sur base de la deuxième correspondance.

7. Appareil coupe-cheveux selon la revendication 5, dans lequel le module de détermination de paramètre (82) comprend:
un troisième sous-module d'acquisition (131) configuré pour acquérir une troisième correspondance préétablie entre des paramètres caractéristiques des cheveux et les modes de fonctionnement de lame, où différents modes de fonctionnement de lame correspondent à différents paramètres de fonctionnement de lame, et l'appareil coupe-cheveux comprend au moins deux modes de fonctionnement de lame; et
un troisième sous-module de détermination (132) configuré pour déterminer un mode de fonctionnement de lame correspondant au paramètre caractéristique des cheveux sur base de la troisième correspondance.

8. Appareil coupe-cheveux selon l'une quelconque des revendications 5 à 7, dans lequel la caractéristique des cheveux comprend au moins l'une parmi une densité de cheveux, une épaisseur de cheveux ou une dureté de cheveux, et dans lequel le paramètre de fonctionnement de lame comprend au moins l'une parmi une vitesse de rotation de lame, une durée de rotation de lame ou une qualité de tranchant de la lame.

9. Support de mémoire lisible par ordinateur sur lequel est mémorisée une instruction d'ordinateur, l'instruction étant exécutée par un processeur en combinaison avec l'appareil selon l'une quelconque des revendications 5 à 8 pour mettre en œuvre les opérations du procédé de commande de l'appareil coupe-cheveux selon l'une quelconque des revendications 1 à 4.
